# FASCICULE DE BREVET EUROPEEN

(11) **EP 3 478 609 B1**
(45) Date de publication et mention de la délivrance du brevet: **04.06.2025**
(21) Numéro de dépôt: 17732473.8
(22) Date de dépôt: 28.06.2017
(51) Int. Cl.: B65G 47/90, B29D 22/02, B66C 1/46

(54) **TÊTE DE PREHENSION ET PROCEDE DE FABRICATION CORRESPONDANT**
GREIFKOPF UND ZUGEHÖRIGES HERSTELLUNGSVERFAHREN
GRIPPING HEAD AND ASSOCIATED PRODUCTION METHOD

(30) Priorité: 30.06.2016 BE 201605511
(43) Date de publication de la demande: 08.05.2019
(73) Titulaire: Simtech S.P.R.L., 7503 Froyennes (BE)
(72) Inventeur: VANDROMME, Pascal, 59830 Cysoing (FR); ROSIER, Reza, 7711 Mouscron (BE)
(74) Mandataire: Cabinet Beau de Loménie
(86) Numéro de dépôt international: PCT/EP2017/066035
(87) Numéro de publication internationale: WO 2018/002160

(56) Documents cités:
- DE-A1- 1 579 282
- DE-A1- 102014 118 979
- FR-A1- 2 611 680
- FR-A1- 2 673 421
- FR-A1- 2 707 614
- GB-A- 872 827
- US-A1- 2006 027 946

## Description

### Arrière-plan de l'invention

La présente invention concerne une tête de préhension d'une machine de manutention pour saisir et déplacer des objets disposés en rangées parallèles, tels des flacons ou bouteilles.

Classiquement, pour manipuler une pluralité de flacons alignés en rangées, on utilise une machine de manutention dont la tête de préhension comprend un châssis auquel sont suspendus des dispositifs gonflables, longilignes et disposés parallèlement entre eux.

Chacun de ces dispositifs gonflables forme globalement un boudin qui, lorsqu'il est dégonflé, peut être inséré entre deux rangées de flacons, notamment au niveau de leur col, et qui, lorsqu'il est gonflé, permet de coincer les cols des bouteilles ou flacons disposés entre deux boudins adjacents, pour permettre la manutention des bouteilles ou flacons.

Chaque dispositif gonflable comprend une enveloppe déformable qui abrite une âme rigide sur laquelle sont fixées des tiges filetées traversant l'enveloppe et permettant la fixation de l'âme et de l'enveloppe déformable à la tête de préhension de la machine de manutention.

L'ensemble est relié par au moins un conduit à un moyen d'alimentation en air comprimé et d'évacuation de cet air comprimé.

Classiquement, l'enveloppe déformable comprend un premier fourreau dit interne et un second fourreau dit externe solidarisés entre eux par vulcanisation. Le premier fourreau est classiquement formé par une feuille de tissu revêtue d'un élastomère que sur une seule de ses faces à savoir la face tournée vers l'extérieur du fourreau. Le premier fourreau est ainsi considéré comme celui permettant d'obtenir l'étanchéité de l'enveloppe déformable, notamment grâce à la couche élastomérique étanche.

Cependant, lorsque la pression à l'intérieur du premier fourreau est supérieure à celle à l'extérieur du premier fourreau, on peut alors observer un décollement entre la couche élastomérique et le tissu sous-jacent, conduisant alors à la formation d'une hernie fragilisant la structure mécanique, et donc l'étanchéité, du premier fourreau.

C'est la raison pour laquelle un second fourreau est prévu, autour du premier fourreau. Le second fourreau est classiquement formé par une feuille de tissu revêtue d'un élastomère sur ses deux faces. Le second fourreau est ainsi considéré comme celui conférant un renfort mécanique à l'enveloppe déformable. Il permet notamment d'éviter la formation de hernie à la surface du premier fourreau, grâce à sa feuille de tissu. Par ailleurs, le revêtement élastomérique interne du second fourreau permet la solidarisation avec le premier fourreau par vulcanisation, tandis que le revêtement élastomérique externe du second fourreau permet une meilleure préhension des cols de bouteilles ou flacons devant être manipulés.

Cependant, une telle structure est longue à fabriquer et nécessite le travail d'opérateurs, ce qui augmente le coût de fabrication d'un dispositif gonflable. Par ailleurs, le second fourreau peut subir des contraintes différentes de celles subies par le premier fourreau, conduisant à un possible décollement des deux fourreaux et à des potentielles fuites.

Il est également connu, sur ce type de dispositif gonflable, de fabriquer l'enveloppe avec un premier fourreau constitué d'une feuille de tissu revêtue par un plastomère sur ses deux faces. Un tel dispositif est notamment décrit dans le document FR 2 673 421, qui divulgue une tête de préhension selon le préambule de la revendication 1, dont chaque dispositif gonflable comprend un fourreau interne et un fourreau externe, chaque fourreau étant réalisé à partir d'une feuille dont les bords longitudinaux se recouvrent partiellement.

Le premier fourreau présente alors une meilleure étanchéité et tenue mécanique. Cependant, la confection du premier fourreau est rendue plus délicate : il faut en effet s'assurer que les parois internes du premier fourreau ne soient pas collées l'une à l'autre, ce qui empêcherait le gonflage de l'enveloppe, mais que le second fourreau est correctement assemblé au premier.

Dans les deux cas, la confection nécessite plusieurs étapes de fabrication, qui sont réalisées par des opérateurs, qui augmentent la durée de fabrication du dispositif de gonflage, ainsi que les coûts de fabrication et les risques d'erreur par l'opérateur.

### Objet et résumé de l'invention

La présente invention vise à résoudre les différents problèmes techniques énoncés précédemment. En particulier, la présente invention vise à fournir un dispositif de préhension pouvant être fabriqué plus simplement et plus rapidement, afin de limiter les coûts de fabrication, tout en permettant d'obtenir un dispositif plus robuste et fiable dans le temps.

Ainsi, selon un aspect, il est proposé une tête de préhension selon la revendication 1. La tête de préhension comporte plusieurs dispositifs gonflables de préhension pour installation de manutention d'objets disposés en rangées parallèles, tels des flacons ou bouteilles. Chaque dispositif gonflable comporte une enceinte longitudinale déformable et gonflable comprenant un unique fourreau fermé par recouvrement des bords longitudinaux de une ou plusieurs feuilles souples étanches à l'air, de préférence par recouvrement des bords longitudinaux d'une feuille souple étanche à l'air.

Grâce à l'utilisation d'un unique fourreau, le dispositif gonflable selon l'invention permet de limiter les étapes de fabrication et les risques d'erreur lors de la confection. En particulier, l'ensemble des dispositifs gonflables de l'art antérieur présentent des enveloppes à fourreaux multiples, l'homme du métier considérant classiquement qu'il n'était pas possible d'obtenir à la fois une résistance mécanique et une étanchéité avec une enveloppe à fourreau unique. Or, ce préjugé technique qui est admis depuis plus de vingt ans, a été vaincu par le demandeur qui a pu réaliser une enveloppe à fourreau unique permettant d'obtenir des **propriétés** d'étanchéité et de résistance mécanique similaires à celles des enveloppes déjà connues.

On entend ici par « unique fourreau » un fourreau dont l'épaisseur de la surface périphérique est égale à l'épaisseur d'une seule feuille et à l'épaisseur de deux feuilles superposées au niveau du ou des recouvrements. Dit autrement, chaque partie de la surface périphérique du fourreau n'est formée, en dehors du ou des recouvrements, que par une seule feuille, et la ou les recouvrements sont formés par deux feuilles.

Préférentiellement, le fourreau est fermé par recouvrement des bords longitudinaux d'une seule feuille souple étanche à l'air. Dans ce cas, le fourreau ne comprend qu'un seul recouvrement : celui de la feuille souple sur elle-même.

Alternativement, le fourreau est fermé par recouvrement des bords longitudinaux de plusieurs feuilles souples étanches à l'air. Dans ce cas, il y a autant de recouvrements que de feuilles formant le fourreau. Par ailleurs, chaque feuille forme une partie uniquement de la surface périphérique du fourreau (par exemple un demi-fourreau ou bien un tiers de fourreau), et les bords longitudinaux de chaque feuille se recouvrent avec les bords longitudinaux d'une ou deux autres feuilles.

Préférentiellement, la longueur du ou des recouvrements des bords longitudinaux est inférieure ou égale au périmètre, par exemple extérieur, du fourreau unique, de préférence inférieure ou égale à la moitié du périmètre du fourreau unique, et encore plus préférentiellement est inférieure ou égale au tiers, voire au quart, du périmètre du fourreau unique. En particulier, on considère ici la longueur du ou des recouvrements de bords longitudinaux dans un plan perpendiculaire à la direction longitudinale de l'enceinte, c'est-à-dire la longueur transversale, ou en section ou en coupe, du ou des recouvrements de bords longitudinaux.

Préférentiellement, la ou les feuilles souples étanches à l'air, de préférence la feuille souple étanche à l'air, comprennent un textile enduit d'une couche d'enduction élastomérique, par exemple un tissu enduit d'un seul côté d'une couche d'enduction élastomérique. Ainsi, la ou les feuilles souples étanches à l'air présentent une face interne au niveau de laquelle est exposé le tissu : les parois internes du fourreau unique ne seront donc pas susceptibles de se coller l'une à l'autre lors d'une étape de vulcanisation.

Préférentiellement, l'adhérence en pelage entre l'enduction élastomérique et le textile mesurée selon la norme ISO 36 de 2011, est supérieure ou égale à 20daN/5cm, de préférence supérieure ou égale à 30daN/5cm, et plus préférentiellement supérieure ou égale à 40daN/5cm. De telles valeurs d'adhérence permettent d'obtenir un adhérisation de la couche d'enduction élastomérique sur le textile, limitant ainsi les risques de hernie.

Préférentiellement, le textile est un textile à mailles fermées, et le textile est fabriqué à partir de fibres synthétiques, par exemple en polyamide ou en polyester.

Préférentiellement, l'enduction élastomérique comprend un polymère styrénique, par exemple du caoutchouc de styrène butadiène (SBR).

Le dispositif gonflable de préhension comporte également un élément de support comprenant une âme longitudinale, par exemple une lame, disposée à l'intérieur de l'enceinte longitudinale, et un ou plusieurs moyens de liaison, et éventuellement de gonflage, de l'âme à la tête de préhension, les moyens de liaison étant montés sur un premier côté longitudinal de l'âme et traversant le fourreau de l'enceinte.

Un des recouvrements de bords longitudinaux du fourreau, de préférence le recouvrement de bords longitudinaux du fourreau, est disposé au niveau dudit premier côté longitudinal de l'âme et est traversé par les moyens de liaison.

Une telle structure permet notamment de renforcer la tenue mécanique et l'étanchéité du fourreau au niveau du recouvrement. Par ailleurs, elle permet d'obtenir un fourreau présentant une structure sensiblement symétrique par rapport au plan de symétrie de l'âme. Les contraintes supportées par le fourreau lorsque le dispositif gonflable de préhension est gonflé, se retrouvent ainsi réparties de manière identique et homogène sur la surface du fourreau unique, évitant ainsi des gradients de contraintes, et donc des risques d'hernie ou de fuite. Par ailleurs, le dispositif gonflable de préhension comportant généralement des éléments d'étanchéités externes au niveau des moyens de liaison, ces éléments d'étanchéités vont venir s'appliquer au niveau du recouvrement de la ou des feuilles souples, et donc renforcer son étanchéité, tandis que les moyens de liaison, généralement en acier, vont renforcer la tenue mécanique du recouvrement au niveau duquel ils traversent les deux bords longitudinaux de la ou des feuilles souples.

Préférentiellement, l'enceinte comporte également une ou plusieurs bandes longitudinales élastomériques ou de textile enduit d'une couche élastomérique, disposées sur la surface extérieure du fourreau unique. De telles bandes permettent de renforcer la résistance à l'usure des parois du dispositif gonflable de préhension, notamment au niveau des zones de contact avec les goulots des bouteilles ou flacons.

Préférentiellement, l'enceinte comporte également, à l'une au moins des extrémités distales du fourreau, une pièce rapportée en forme de U, ou pince, venant fermer le fourreau. Une telle pièce permet de venir pincer les extrémités du fourreau unique pour les rendre étanches. Une telle pièce rapportée peut comprendre, voire être constituée, d'un tissu enduit d'une couche d'enduction élastomérique sur une seule face ou sur les deux faces.

Préférentiellement, le dispositif gonflable de préhension comprend également un moyen d'étanchéité sous forme d'un morceau en matériau élastomérique, disposé à l'une au moins des extrémités distales du fourreau et recouvert par la pièce rapportée en forme de U.

Selon un autre aspect, l'invention concerne également une machine de manutention comportant une tête de préhension telle que décrite précédemment.

Selon un autre aspect, l'invention concerne également un procédé de fabrication d'une tête de préhension telle que décrite précédemment, comprenant les étapes suivantes de fabrication de chacun des dispositifs gonflables :
a) on fournit une ou plusieurs feuilles souples étanches à l'air, de préférence une, et
b) on forme un fourreau unique en le fermant par recouvrement des bords longitudinaux desdites feuilles souples étanches, de préférence par recouvrement des bords longitudinaux d'une feuille souple étanche à l'air.

L'étape a) comprend également la fourniture d'un élément de support comprenant une âme longitudinale, par exemple une lame, et un ou plusieurs moyens de liaison, et éventuellement de gonflage, de l'âme à l'installation de manutention, les moyens de liaison étant montés sur un premier côté longitudinal de l'âme.

Durant l'étape b), on forme le fourreau unique par recouvrement des bords longitudinaux d'une seule feuille souple étanche à l'air, et l'étape b) comprend :
b1) la perforation de chaque bord longitudinal de la seule feuille souple de manière à ménager des ouvertures de passage des moyens de liaison de l'âme, puis
b2) le positionnement des moyens de liaison de l'âme dans les ouvertures de passage d'un des bords longitudinaux de la feuille souple, puis
b3) l'enroulement de la feuille souple autour de l'âme, puis
b4) le positionnement des moyens de liaison de l'âme dans les ouvertures de passage de l'autre desdits bords longitudinaux de la feuille souple.

Il devient alors aisé pour un opérateur de positionner correctement les bords longitudinaux de la feuille souple à superposer. En effet, les perforations à insérer dans les moyens de liaison conduisent directement l'opérateur à obtenir la longueur et la position de recouvrement voulues, ce qui facilite la confection du dispositif gonflable de préhension, et le rend plus fiable.

Préférentiellement, le procédé comprend également une étape c) de fermeture des extrémités distales du fourreau, par exemple par ajout d'une pièce rapportée en forme de U, et éventuellement d'un moyen d'étanchéité sous forme d'un morceau en matériau élastomérique, à l'une au moins des extrémités distales du fourreau.

### Brève description des dessins

L'invention et ses avantages seront mieux compris à la lecture de la description détaillée d'un mode de réalisation particulier, pris à titre d'exemple nullement limitatif et illustré par les dessins annexés sur lesquels :
- la figure 1 est une vue schématique en perspective d'un dispositif de préhension selon l'invention,
- la figure 2 est une vue du dessous en coupe d'une extrémité fermée du dispositif de préhension de la figure 1, et
- la figure 3 est une représentation schématique de la feuille souple étanche utilisée pour former le fourreau unique.

### Description détaillée de l'invention

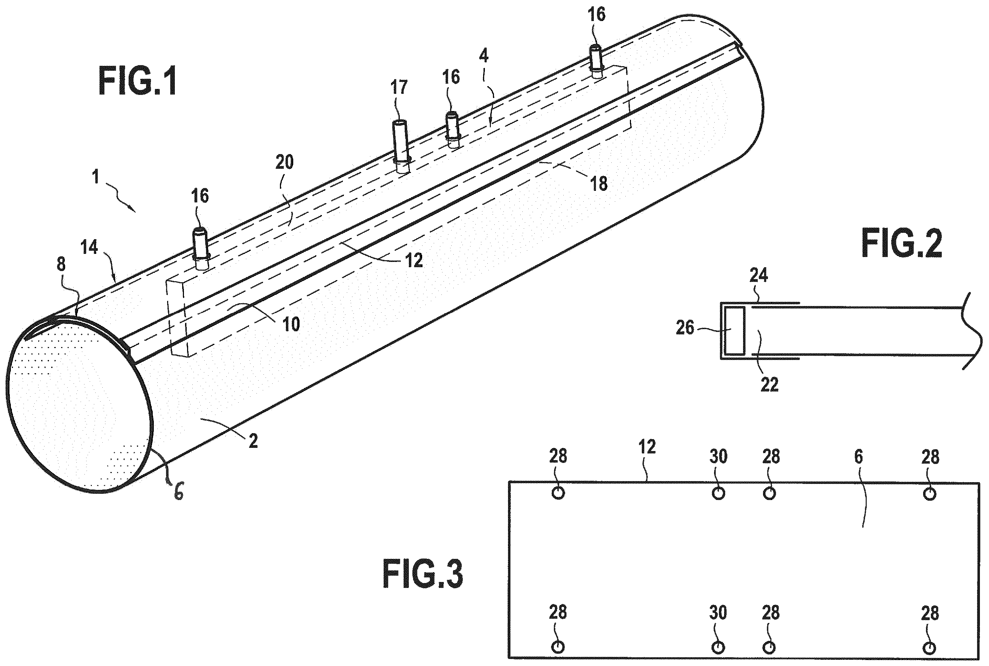

La figure 1 illustre un mode de réalisation d'un dispositif gonflable de préhension 1 pour une tête de préhension selon l'invention. Le dispositif gonflable de préhension 1 permet, lorsqu'il est monté sur une tête de préhension d'une machine de manutention avec d'autres dispositifs 1 similaires, tous reliés à une alimentation en air comprimé, de saisir et de déplacer des objets disposés en rangées parallèles, par exemple des flacons ou des bouteilles. De telles machines de manutention sont classiques et ne seront pas décrites en détails ci-après, mais uniquement le dispositif gonflable de préhension 1.

La figure 1 illustre ainsi une portion de dispositif gonflable de préhension 1 dont l'extrémité distale est représentée ouverte aux fins de la description. Le dispositif gonflable 1 comprend ainsi un fourreau 2 et un élément de support 4 disposé à l'intérieur du fourreau 2. En particulier, le dispositif gonflable 1 ne comporte qu'un seul et unique fourreau.

Le fourreau 2, tel qu'illustré à la figure 1, est formé à partir d'une feuille souple et étanche à l'air 6. La feuille souple 6 est de préférence une couche textile, par exemple en polyester, enduite, sur une seule face, d'une enduction élastomérique, par exemple à base de caoutchouc de styrène butadiène (SBR). La face textile est orientée vers l'intérieur du fourreau 2, ce qui permet, lors de la fabrication du dispositif gonflable 1, d'effectuer une étape de vulcanisation du fourreau directement autour de l'élément de support 4 du dispositif de gonflable 1 sans provoquer un collage des parois internes du fourreau 2 l'une avec l'autre. Par ailleurs, la feuille souple 6 est repliée sur elle-même de manière à obtenir un recouvrement 8 de ses bords longitudinaux. Le recouvrement 8 est positionné sur le côté supérieur du dispositif gonflable 1, c'est-à-dire du côté destiné à être fixé à la tête de préhension de la machine de manutention. Dans la mesure où le dispositif de préhension 1 présente sensiblement un plan de symétrique qui est, sur la figure 1, un plan vertical passant par l'axe longitudinal du dispositif gonflable 1, un recouvrement 8 disposé sur le côté supérieur du fourreau 2, permet de garder une structure sensiblement symétrique limitant l'apparition d'une zone de faiblesse ou de fragilisation susceptible de provoquer des fuites ou des hernies.

Le recouvrement 8 peut aisément être réalisé grâce à la couche d'enduction extérieure de la feuille souple 6, qui permet, lors d'une étape de vulcanisation, de se fixer à la face textile de la feuille souple 6 qui vient la recouvrir au niveau du recouvrement 8.

Une bande longitudinale 10 élastomérique ou en textile enduit d'une couche élastomérique, peut être prévue au-dessus de l'extrémité extérieure 12 du recouvrement 8, afin de renforcer l'étanchéité du recouvrement 8, notamment en limitant les fuites d'air pouvant avoir lieu dans l'épaisseur de la couche textile de la feuille souple 6.

Le fourreau délimite ainsi une enceinte longitudinale 14 étanche à l'air pouvant être gonflée et dégonflée successivement afin d'être positionnée entre les goulots de bouteilles ou flacons, et de pouvoir ensuite s'en saisir, pour les manipuler.

A cet effet, l'élément de support 4 du dispositif gonflable 1 comporte des moyens de liaison 16. Tel qu'illustré à la figure 1, l'élément de support 4 comporte une lame 18 disposée longitudinalement dans le fourreau 2, et présentant, en coupe, une forme générale rectangulaire avec deux grands côtés disposés selon le plan de symétrie du dispositif gonflable 1, c'est-à-dire verticalement sur la figure 1, et deux petits côtés. Ainsi, la lame 18 présente un premier côté 20 disposé sur le côté supérieur du dispositif gonflable 1, c'est-à-dire orienté vers la tête de préhension de la machine de manutention. Les moyens de liaison 16 sont ainsi montés sur le premier côté 20 de la lame 18. Il est alors possible de fixer le dispositif gonflable 1, et en particulier le fourreau 2, à une tête de préhension. Un moyen de gonflage 17 distinct des moyens de liaison 16, peut également être prévu et monté sur le première côté de la lame 18, par exemple parallèlement aux moyens de liaison 16, afin d'alimenter l'enceinte longitudinale 14 est air comprimé. A cet effet, une ouverture peut être prévue dans la lame 18 afin de permettre au moyen de gonflage 17 de déboucher dans l'enceinte 14.

La figure 2 représente un mode de réalisation particulier de fermeture étanche des extrémités distales 22 de l'enceinte 14. Dans ce mode de réalisation, l'extrémité de l'enceinte 14 est fermée de manière étanche à l'aide d'un moyen formant pince, en particulier à l'aide d'une pièce rapportée 24 en forme de U. La pièce rapportée 24 peut être élastomérique ou en textile enduit d'une couche élastomérique sur au moins une face. La pièce rapportée 24 est fixée sur les deux parois latérales en regard du fourreau 2 formée par la pièce souple 6. Afin d'améliorer l'étanchéité, lorsque la pièce rapportée 24 comporte un textile enduit sur au moins une face par une enduction élastomérique, ladite face enduite est placée en contact avec la face extérieure de la feuille souple 6 afin de permettre une liaison étanche entre la feuille souple 6 et la pièce rapportée 24.

Par ailleurs, un moyen d'étanchéité 26, par exemple un morceau en matériau élastomérique, peut être positionné entre l'extrémité distale de l'enceinte 14 et la portion en U de la pièce rapportée 24. On obtient ainsi une enceinte 14 entièrement hermétique qui est simple à fabriquer grâce notamment à un nombre de pièces distinctes limité.

La figure 3 illustre un exemple de feuille souple 6 pouvant être utilisée pour fabriquer un fourreau 2 tel que décrit précédemment. Comme illustré à la figure 3, la feuille souple 6 est de forme générale rectangulaire avec deux grands côtés, dont notamment l'extrémité extérieure 12 du recouvrement, et deux petits côtés qui délimiteront les extrémités distales 22. La feuille souple 6 comporte surtout des ouvertures 28 disposées le long des bords longitudinaux, pour permettre le passage des moyens de liaison 16 de l'élément de support 4. La feuille souple 6 peut également comporter des ouvertures 30 disposées le long des bords longitudinaux, pour permettre le passage du moyen de gonflage 17 de l'enceinte 14.

Les ouvertures 28 et 30 sont disposées par paires, chaque paire comportant une ouverture montée à chaque extrémité longitudinale de la feuille souple 6. De plus, les ouvertures 28, 30 sont montées de manière symétrique par rapport à un plan longitudinal passant par le milieu longitudinal de la feuille souple 6 qui est horizontal sur la figure 3, de sorte qu'en repliant la feuille souple 6 autour dudit milieu longitudinal, les ouvertures 28, 30 de chaque paire puissent se superposer.

Pour fabriquer le fourreau 2, il suffit ainsi de venir positionner l'élément de support 4 sur le côté non-enduit de la feuille souple 6, et de passer les moyens de liaison 16 et de gonflage 17 dans les ouvertures 28, 30 correspondantes du bord longitudinal supérieur. Puis on vient entourer la lame 18 de l'élément de support 4 avec la feuille souple 6 en remontant le bord longitudinal opposé 12 vers le haut et en faisant passer les moyens de liaison 16 et de gonflage 17 dans les ouvertures 28, 30 correspondantes du bord longitudinal opposé 12 pour obtenir un recouvrement des bords longitudinaux de la feuille souple 6. Il ne suffit plus, alors, que de vulcaniser ledit recouvrement pour obtenir un fourreau tel que décrit à la figure 1.

On constate ainsi qu'il est particulièrement aisé pour un opérateur de mettre en œuvre les étapes du procédé de fabrication du fourreau 2 : il n'a plus qu'à utiliser les ouvertures 28, 30 déjà formées dans la feuille souple 6 pour obtenir directement la longueur de recouvrement prévue initialement, et donc le périmètre souhaité de l'enceinte 14. On peut ainsi fabriquer des dispositifs gonflables 1 de manière plus rapide et plus fiable.

Grâce à l'invention, il est ainsi possible d'obtenir avec un coût réduit, un dispositif de préhension fiable et robuste.

## Revendications

1. Tête de préhension d'une machine de manutention pour saisir et déplacer des objets disposés en rangées parallèles, tels des flacons ou bouteilles, la tête de préhension comprenant plusieurs dispositifs gonflables (1) reliés à une alimentation en air comprimé et comportant, chacun :
- une enceinte longitudinale déformable et gonflable (14) ; et
- un élément de support (4) comprenant une âme longitudinale disposée à l'intérieur de l'enceinte longitudinale (14), et un ou plusieurs moyens de liaison (16), et éventuellement de gonflage, de l'âme à la tête de préhension, les moyens de liaison (16) étant montés sur un premier côté longitudinal (20) de l'âme et traversant le fourreau (2) de l'enceinte, **caractérisé en ce que**, pour chaque dispositif gonflable (1) :
- l'enceinte longitudinale déformable et gonflable (14) comprenant un unique fourreau (2) fermé par recouvrement (8) des bords longitudinaux de une ou plusieurs feuilles souples étanches à l'air, de préférence par recouvrement (8) des bords longitudinaux d'une feuille souple étanche à l'air (6), un fourreau unique étant un fourreau dont l'épaisseur de la surface périphérique est égale à l'épaisseur d'une seule feuille et à l'épaisseur de deux feuilles superposées au niveau du ou des recouvrements,
- un des recouvrements de bords longitudinaux du fourreau est disposé au niveau dudit premier côté longitudinal (20) de l'âme et est traversé par les moyens de liaison (16).

2. Tête de préhension selon la revendication 1, dans laquelle la ou les feuilles souples étanches à l'air, de préférence la feuille souple étanche à l'air (6), comprennent un textile enduit d'une couche d'enduction élastomérique, par exemple un tissu enduit d'un seul côté d'une couche d'enduction élastomérique.

3. Tête de préhension selon la revendication 2, dans laquelle l'adhérence en pelage entre l'enduction élastomérique et le textile mesurée selon la norme ISO 36 de 2011, est supérieure ou égale à 20daN/5cm, de préférence supérieure ou égale à 30daN/5cm, et plus préférentiellement supérieure ou égale à 40daN/5cm.

4. Tête de préhension selon la revendication 2 ou 3, dans laquelle le textile est un textile à mailles fermées, et dans lequel le textile est fabriqué à partir de fibres synthétiques, par exemple en polyamide ou en polyester.

5. Tête de préhension selon l'une quelconque des revendications 2 à 4, dans laquelle l'enduction élastomérique comprend un polymère styrénique, par exemple du caoutchouc de styrène butadiène (SBR).

6. Tête de préhension selon l'une quelconque des revendications précédentes, dans laquelle l'âme longitudinale est une lame (18).

7. Tête de préhension selon la revendication précédente, dans laquelle l'unique fourreau (2) est fermé par recouvrement (8) des bords longitudinaux d'une feuille souple étanche à l'air (6), et dans laquelle ledit recouvrement (8) de bords longitudinaux du fourreau (2) est disposé au niveau dudit premier côté longitudinal (20) de l'âme et est traversé par les moyens de liaison (16).

8. Tête de préhension selon l'une quelconque des revendications précédentes, dans laquelle l'enceinte (14) comporte également une ou plusieurs bandes longitudinales (10) élastomériques ou de textile enduit d'une couche élastomérique, disposées sur la surface extérieure du fourreau unique (2).

9. Tête de préhension selon l'une quelconque des revendications précédentes, dans laquelle l'enceinte (14) comporte également, à l'une au moins des extrémités distales (22) du fourreau (2), une pièce rapportée (24) en forme de U venant fermer le fourreau (2).

10. Tête de préhension selon la revendication précédente, dans laquelle chaque dispositif gonflable (1) comprend également un moyen d'étanchéité (26) sous forme d'un morceau en matériau élastomérique, disposé à l'une au moins des extrémités distales (22) du fourreau et recouvert par la pièce rapportée (24) en forme de U.

11. Tête de préhension selon l'une quelconque des revendications précédentes, dans laquelle la longueur transversale du ou des recouvrements des bords longitudinaux est inférieure ou égale au périmètre du fourreau unique, de préférence inférieure ou égale à la moitié du périmètre du fourreau unique, et encore plus préférentiellement est inférieure ou égale au tiers, voire au quart, du périmètre du fourreau unique.

12. Procédé de fabrication d'une tête de préhension selon l'une quelconque des revendications précédentes, comprenant les étapes suivantes de fabrication de chacun des dispositifs gonflables (1) :
a) on fournit une ou plusieurs feuilles souples étanches à l'air, de préférence une ; un élément de support (4) comprenant une âme longitudinale, par exemple une lame (18) ; un ou plusieurs moyens de liaison (16), et éventuellement de gonflage, de l'âme à la tête de préhension, les moyens de liaison (16) étant montés sur un premier côté longitudinal (20) de l'âme, et
b) on forme un fourreau unique (2) en le fermant par recouvrement (8) des bords longitudinaux d'une seule feuille souple (6) étanche à l'air, et dans lequel l'étape b) comprend : b1) la perforation de chaque bord longitudinal de la seule feuille souple (6) de manière à ménager des ouvertures (28) de passage des moyens de liaison (16) de l'âme, puis b2) le positionnement des moyens de liaison (16) de l'âme dans les ouvertures (28) de passage d'un des bords longitudinaux de la feuille souple (6), puis b3) l'enroulement de la feuille souple (6) autour de l'âme, puis b4) le positionnement des moyens de liaison (16) de l'âme dans les ouvertures (28) de passage de l'autre desdits bords longitudinaux de la feuille souple (6).

13. Procédé selon la revendication 12, comprenant également une étape c) de fermeture des extrémités distales (22) du fourreau (2), par exemple par ajout d'une pièce rapportée (24) en forme de U, et éventuellement d'un moyen d'étanchéité (26) sous forme d'un morceau en matériau élastomérique, à l'une au moins des extrémités distales (22) du fourreau (2).

## Patentansprüche

1. Greifkopf einer Handhabungsmaschine zum Erfassen und Bewegen von Gegenständen, die in parallelen Reihen angeordnet sind, wie Flakons oder Flaschen, wobei der Greifkopf mehrere aufblasbare Vorrichtungen (1) umfasst, die mit einer Druckluftversorgung verbunden sind und jeweils beinhalten:
- eine verformbare und aufblasbare längliche Einhausung (14); und
- ein Trägerelement (4) umfassend einen Längssteg, der im Inneren der länglichen Einhausung (14) angeordnet ist, und ein oder mehrere Mittel (16) zur Verbindung, und gegebenenfalls zum Aufblasen, des Stegs mit dem Greifkopf, wobei die Verbindungsmittel (16) auf einer ersten Längsseite (20) des Stegs montiert sind und den Mantel (2) der Einhausung durchqueren,
**dadurch gekennzeichnet, dass** für jede aufblasbare Vorrichtung (1):
- die verformbare und aufblasbare längliche Einhausung (14) einen einzelnen Mantel (2) umfasst, der durch Abdeckung (8) der Längsränder mit einem oder mehreren flexiblen, luftdichten Blättern verschlossen ist, vorzugsweise durch Abdeckung (8) der Längsränder mit einem flexiblen, luftdichten Blatt (6),
wobei ein einzelner Mantel ein Mantel ist, dessen Dicke der umlaufenden Oberfläche gleich der Dicke eines einzelnen Blatts und der Dicke von zwei Blättern ist, die an der einen oder den mehreren Abdeckungen übereinandergelegt sind,
- eine der Abdeckungen der Längsränder des Mantels an der ersten Längsseite (20) des Stegs angeordnet ist und von den Verbindungsmitteln (16) durchquert wird.

2. Greifkopf nach Anspruch 1, wobei das oder die flexiblen, luftdichten Blätter, vorzugsweise das flexible luftdichte Blatt (6), einen Stoff umfassen, der mit einer elastomeren Beschichtungsschicht beschichtet ist, zum Beispiel ein Gewebe, das nur auf einer Seite mit einer elastomeren Beschichtungsschicht beschichtet ist.

3. Greifkopf nach Anspruch 2, wobei die Schälfestigkeit zwischen der elastomeren Beschichtung und dem Stoff, gemessen nach der Norm ISO 36 aus 2011, größer oder gleich 20 daN/5 cm, vorzugsweise größer oder gleich 30 daN/5 cm, und am meisten bevorzugt größer oder gleich 40 daN/5 cm ist.

4. Greifkopf nach Anspruch 2 oder 3, wobei der Stoff ein Stoff aus geschlossenen Maschen ist, und wobei der Stoff aus synthetischen Fasern, zum Beispiel aus Polyamid oder aus Polyester, hergestellt ist.

5. Greifkopf nach einem der Ansprüche 2 bis 4, wobei die elastomere Beschichtung ein Styrolpolymer umfasst, zum Beispiel Styrol-Butadien-Kautschuk (SBR).

6. Greifkopf nach einem der vorhergehenden Ansprüche, wobei der Längssteg eine Klinge (18) ist.

7. Greifkopf nach dem vorhergehenden Anspruch, wobei der einzelne Mantel (2) durch Abdeckung (8) der Längsränder mit einem flexiblen luftdichten Blatt (6) verschlossen ist, und wobei die Abdeckung (8) der Längsränder des Mantels (2) an der ersten Längsseite (20) des Stegs angeordnet ist und von den Verbindungsmitteln (16) durchquert wird.

8. Greifkopf nach einem der vorhergehenden Ansprüche, wobei die Einhausung (14) auch einen oder mehrere elastomere oder aus einem mit einer elastomeren Schicht beschichteten Stoff bestehende Längsstreifen (10) beinhaltet, die auf der äußeren Oberfläche des einzelnen Mantels (2) angeordnet sind.

9. Greifkopf nach einem der vorhergehenden Ansprüche, wobei die Einhausung (14) an zumindest einem der distalen Enden (22) des Mantels (2) auch ein aufgesetztes U-förmiges Teil (24) beinhaltet, das den Mantel (2) verschließt.

10. Greifkopf nach dem vorhergehenden Anspruch, wobei jede aufblasbare Vorrichtung (1) auch ein Dichtungsmittel (26) in Form eines Stücks aus Elastomermaterial umfasst, das an zumindest einem der distalen Enden (22) des Mantels angeordnet ist und von dem aufgesetzten U-förmigen Teil (24) abgedeckt wird.

11. Greifkopf nach einem der vorhergehenden Ansprüche, wobei die Querlänge der Abdeckung oder Abdeckungen der Längsränder kleiner oder gleich dem Umfang des einzelnen Mantels ist, vorzugsweise kleiner oder gleich der Hälfte des Umfangs des einzelnen Mantels, und sogar noch bevorzugter kleiner oder gleich dem Drittel oder dem Viertel des Umfangs des einzelnen Mantels ist.

12. Verfahren zur Herstellung eines Greifkopfs nach einem der vorhergehenden Ansprüche, umfassend die folgenden Schritte zur Herstellung einer jeden der aufblasbaren Vorrichtungen (1):
a) ein oder mehrere flexible luftdichte Blätter, vorzugsweise eines; ein Trägerelement (4) umfassend einen Längssteg, zum Beispiel eine Klinge (18), ein oder mehrere Mittel (16) zur Verbindung, und gegebenenfalls zum Aufblasen, des Stegs mit dem Greifkopf, wobei die Verbindungsmittel (16) auf einer ersten Längsseite (20) des Stegs montiert sind, werden bereitgestellt und
b) ein einzelner Mantel (2) wird gebildet, indem er durch Abdeckung (8) der Längsränder mit einem einzelnen flexiblen luftdichten Blatt (6) geschlossen wird, und wobei der Schritt b) umfasst:
b1) die Perforation eines jeden Längsrands des einzelnen flexiblen Blattes (6) auf eine Weise, um Öffnungen (28) für den Durchgang der Verbindungsmittel (16) des Stegs einzubringen, anschließend
b2) die Positionierung der Verbindungsmittel (16) des Stegs in den Durchgangsöffnungen (28) eines der Längsränder des flexiblen Blattes (6), anschließend
b3) das Umwickeln des flexiblen Blatts (6) um den Steg, anschließend b4) die Positionierung der Verbindungsmittel (16) des Stegs in den Durchgangsöffnungen (28) des anderen der Längsränder des flexiblen Blatts (6).

13. Verfahren nach Anspruch 12, umfassend auch einen Schritt c) des Verschließens der distalen Enden (22) des Mantels (2), zum Beispiel durch Hinzufügen eines aufgesetzten U-förmigen Teils (24), und gegebenenfalls eines Dichtungsmittels (26) in Form eines Stücks aus Elastomermaterial, an zumindest einem der distalen Enden (22) des Mantels (2).

## Claims

1. A gripper head of a handling machine for taking hold of and moving objects arranged in parallel rows, such as bottles or jars, the gripper head comprising several inflatable devices (1) connected to means for feeding compressed air and each comprising:
- a deformable and inflatable longitudinal enclosure (14); and
- a support element (4) comprising a longitudinal core arranged inside the longitudinal enclosure (14), together with one or more connection means (16), and possibly inflation means, between the core and the gripper head, the connection means (16) being mounted on a first longitudinal side (20) of the core and passing through the sheath (2) of the enclosure;
**characterized in that**, for each inflatable device (1):
- said deformable and inflatable longitudinal enclosure (14) comprising a single sheath (2) closed by overlapping (8) longitudinal margins of one or more airtight flexible sheets, preferably by overlapping (8) the longitudinal margins of a single flexible airtight sheet (6), a single sheath being a sheath of peripheral surface thickness that is equal to the thickness of a single sheet and, at one or more overlaps, to the thickness of two superposed sheets,
- one of the overlaps between longitudinal margins of the sheath is arranged at said first longitudinal side (20) of the core and has the connection means (16) passed therethrough.

2. A gripper head according to claim 1, wherein the flexible airtight sheet(s), preferably the single flexible airtight sheet (6), comprise(es) a textile coated in an elastomer coating layer, e.g. a fabric coated on one side only in an elastomer coating layer.

3. A gripper head according to claim 2, wherein the peel strength between the elastomer coating and the textile as measured in compliance with the standard ISO 36:2011 is greater than or equal to 20 daN/5 cm, preferably greater than or equal to 30 daN/5 cm, and more preferably greater than or equal to 40 daN/5 cm.

4. A gripper head according to claim 2 or claim 3, wherein the textile is a closed-mesh textile, and wherein the textile is fabricated using synthetic fibers, e.g. of polyamide or of polyester.

5. A gripper head according to any one of claims 2 to 4, wherein the elastomer coating comprises a styrene polymer, e.g. styrene butadiene rubber (SBR).

6. A gripper head according to any preceding claim, wherein the longitudinal core is a blade (18).

7. A gripper head according to the preceding claim, wherein the single sheath (2) is closed by overlapping (8) the longitudinal margins of a flexible airtight sheet (6), and wherein said single overlap (8) between longitudinal margins of the sheath (2) is/are arranged at said first longitudinal side (20) of the core and has the connection means (16) passed therethrough.

8. A gripper head according to any preceding claim, wherein the enclosure (14) also includes one or more longitudinal strips (10) of elastomer or of textile coated in an elastomer layer, arranged on the outside surface of the single sheath (2).

9. A gripper head according to any preceding claim, wherein the enclosure (14) also includes, at at least one of the distal ends (22) of the sheath (2), a U-shaped fitting (24) closing the sheath (2).

10. A gripper head according to the preceding claim, wherein each inflatable device (1) also includes sealing means (26) in the form of a piece of elastomer material arranged at at least one of the distal ends (22) of the sheath and covered by the U-shaped fitting (24).

11. A gripper head according to any preceding claim, wherein the transverse length of the or each overlap between the longitudinal margins is less than or equal to the perimeter of the single sheath, preferably less than or equal to half the perimeter of the single sheath, or indeed more preferably less than or equal to one-third or even one-fourth of the perimeter of the single sheath.

12. A fabrication method for fabricating a gripper head according to any preceding claim, the method comprising the following steps for fabricating each of the inflatable devices (1):
a) providing one or more flexible airtight sheets, preferably a single sheet; a support element (4) comprising a longitudinal core, e.g. a blade (18); one or more connection means (16), and optionally inflation means, between the core and the gripper head, the connection means (16) being mounted on a first longitudinal side (20) of the core, and
b) forming a single sheath (2) by closing the sheath by overlapping (8) the longitudinal margins of a single flexible airtight sheet (6), and wherein step b) comprises:
b1) perforating each longitudinal margin of the single flexible sheet (6) so as to provide through openings (28) for passing the connection means (16) of the core; then
b2) positioning the connection means (16) of the core in the through openings (28) in one of the longitudinal margins of the flexible sheet (6); then
b3) winding the flexible sheet (6) around the core; and then
b4) positioning the connection means (16) of the core in the through openings (28) of the other one of said longitudinal margins of the flexible sheet (6).

13. A method according to claim 12, also comprising a step c) of closing the distal ends (22) of the sheath (2), e.g. by adding respective U-shaped fittings (24), and optionally by adding sealing means (26) in the form of a piece of elastomer material, at at least one of the distal ends (22) of the sheath (2).
